# EUROPEAN PATENT APPLICATION

(11) **EP 2 208 765 A1**
(43) Date of publication of application: **21.07.2010**
(21) Application number: 08847273.3
(22) Date of filing: 04.11.2008
(51) Int. Cl.: C09D 11/10, C08G 18/66, C08G 65/26

(54) **POLYURETHANE FOR PRINTING INK BINDER, METHOD FOR PRODUCING THE SAME AND PRINTING INK**

(30) Priority: 05.11.2007 JP 2007287651; 29.08.2008 JP 2008222100
(71) Applicant: Asahi Glass Company, Limited, Chiyoda-ku Tokyo 100-8405 (JP)
(72) Inventor: TSUGE, Yukio, Kamisu-city Ibaraki 314-0195 (JP); SATO, Hisashi, Kamisu-city Ibaraki 314-0195 (JP); NAGASAKI, Yuuko, Kamisu-city Ibaraki 314-0195 (JP); NAKAMURA, Makito, Kamisu-city Ibaraki 314-0195 (JP); ARAI, Takeaki, Kamisu-city Ibaraki 314-0195 (JP)
(74) Representative: Hartz, Nikolai
(86) International application number: PCT/JP2008/070066
(87) International publication number: WO 2009/060838

(57) **Abstract**

Provided is a polyurethane for printing ink binders excellent in solubility in a solvent having a low solvency, low viscosity and adhesion to films, and a method for producing the same.

A method for producing urethane for printing ink binders, wherein a polyurethane is obtained by reacting a polyol (A), a polyisocyanate compound (B) and a chain extender (C), and the polyol (A) contains a polyesterether polyol (A1) which is obtained by copolymerizing a polycarboxylic acid anhydride (b) and an alkylene oxide (c) to an initiator (a) in the presence of a catalyst (x).

## Description

### TECHNICAL FIELD

The present invention relates to a polyurethane for printing ink binders produced by using a specific polyesterether polyol, particularly to a polyurethane for printing ink binders which is well soluble even in a solvent having a low solvency and excellent in adhesion to a film and a method for producing the same, and it relates also to a printing ink containing the polyurethane for printing ink binders.

### BACKGROUND ART

In recent years, a polyurethane binder excellent in both aspects of consideration for environmental conservation of global scale and high quality, and a printing ink containing such a binder, are required. As a binder which satisfies such requirements, a polyurethane is desired which is well soluble even in a solvent having a low solvency and excellent in adhesion to a film for food packaging e.g. PET, nylon, polyolefin, etc.

Heretofore, as a solvent for a printing ink, a solvent having a relatively high solvency has been used. As such a solvent, an aromatic solvent such as toluene, or a ketone solvent such as methyl ethyl ketone may, for example, be mentioned. On the other hand, from an environmental conservation aspect, use of a solvent having a low solvency is required in recent years. As such a solvent, an ester solvent such as ethyl acetate, or an alcoholic solvent such as isopropyl alcohol may, for example, be mentioned.

For example, Patent Document 1 discloses a printing ink binder containing a polyurethane having an amine value of from 0.1 to 10 obtained by reacting a high molecular weight polyol containing a polyether polyol such as polyoxypropylene glycol, a polyisocyanate compound and a chain extender. Further, it is also disclosed that polyether polyol and polyester polyol may be used together as the high molecular weight polyol.

Patent Document 2 discloses an urethane resin produced by using a polyol obtained by addition polymerization of propylene oxide with polyoxytetramethylene glycol (PTMG).

Further, Patent Document 3 discloses a method wherein a diol such as polyether diol and/or polyester diol is reacted with a diisocyanate to obtain an urethane prepolymer having a terminal isocyanate group bonded to a carbon of a secondary and/or tertiary aliphatic hydrocarbon, and such an urethane prepolymer is reacted with a chain extender in an alcoholic solvent to obtain an alcohol soluble urethane resin.
Patent Document 1: JP-A-2003-206431
Patent Document 2: WO2006/043569
Patent Document 3: JP-A-2003-321526

### DISCLOSURE OF THE INVENTION

### OBJECT TO BE ACCOMPLISHED BY THE INVENTION

The object of the present invention is to provide a polyurethane for printing ink binders, which is excellent in solubility in a solvent having a low solvency such as ethyl acetate or isopropyl alcohol and excellent also in adhesion to various films for food packaging, and a method for producing the same.

### MEANS TO ACCOMPLISH THE OBJECT

The present inventors have conducted extensive studies on the construction of the polyurethane for printing ink binders in order to accomplish the above object, and as a result, the present invention has been accomplished. That is, the present invention provides the following.
[1] A polyurethane for printing ink binders comprising a constituting unit derived from an initiator (a) having at least two active hydrogen groups per molecule, a constituting unit derived from a dicarboxylic acid anhydride (b), a constituting unit derived from an alkylene oxide (c), a constituting unit derived from a polyisocyanate (B) and a constituting unit derived from a chain extender (C).
[2] The polyurethane for printing ink binders according to the above [1], wherein the initiator (a) is a polyether polyol, a polyhydric alcohol, a polyoxytetramethylene glycol, a polyester polyol or a polycarbonate polyol.
[3] The polyurethane for printing ink binders according to the above [1] or [2], wherein the dicarboxylic acid anhydride (b) is phthalic anhydride or hexahydrophthalic anhydride.
[4] The polyurethane for printing ink binders according to any one of the above [1] to [3], wherein the alkylene oxide (c) is propylene oxide or ethylene oxide.
[5] The polyurethane for printing ink binders according to any one of the above [1] to [4], wherein the chain extender (C) is a compound having two amino groups.
[6] A method for producing a polyurethane for printing ink binders, which comprises a step of ring opening polymerization of an initiator (a) having at least two active hydrogen groups per molecule with a mixture of a dicarboxylic acid anhydride (b) and an alkylene oxide (c) to obtain a polyesterether polyol (A1), a step of reacting a polyol (A) including the polyesterether polyol (A1) with a polyisocyanate (B) to obtain an isocyanate-terminated prepolymer (UI), a step of reacting the isocyanate-terminated prepolymer (UI) with a chain extender (C) to obtain a polyurethane (UIH).
[7] The method for producing a polyurethane for printing ink binders according to the above [6], wherein in the polyesterether polyol (A1) a constituting unit derived from the initiator (a) is from 1 to 60 mass%, a constituting unit derived from the dicarboxylic acid anhydride (b) is from 10 to 50 mass%, and the molar ratio of the alkylene oxide (c) to the dicarboxylic acid anhydride (b) is [amount (mol) of the alkylene oxide (c)]/[amount (mol) of the dicarboxylic acid anhydride (b)]= from 50/50 to 95/5.
[8] The method for producing a polyurethane for printing ink binders according to the above [6] or [7], wherein the polyesterether polyol (A1) has a hydroxyl value of from 10 to 250 mgKOH/g.
[9] The method for producing a polyurethane for printing ink binders according to any one of the above [6] to [8], wherein the polyesterether polyol (A1) has an average molecular weight (M') of from 50 to 3,000 per copolymerization chain.
[10] The method for producing a polyurethane for printing ink binders according to any one of the above [6] to [9], wherein the polyurethane (UIH) has a weight average molecular weight of from 30,000 to 300,000.
[11] The method for producing a polyurethane for printing ink binders according to any one of the above [6] to [10], wherein a constituting unit derived from the dicarboxylic acid anhydride (b) is from 10 to 50 mass% in the polyesterether polyol (A1).
[12] The method for producing a polyurethane for printing ink binders according to any one of the above [6] to [11], wherein the polyisocyanate (B) is at least one member selected from the group consisting of isophorone diisocyanate, hexamethylene diisocyanate, 2,4-tolylene diisocyanate and 2,6-tolylene diisocyanate.
[13] A printing ink containing the polyurethane for printing ink binders as defined in any one of the above [1] to [5].
[14] The printing ink according to the above [13], wherein the blend amount of the polyurethane for printing ink binders as defined in any one of the above [1] to [5] is from 5 to 30 mass% as a resin solid content in the printing ink.

### EFFECTS OF THE INVENTION

A polyurethane for printing ink binders of the present invention is excellent in solubility in a solvent having a low solvency such as ethyl acetate or isopropyl alcohol and excellent also in adhesion to various films for food packaging, and is thus applicable to a non-absorbent film material such as polyethylene, polypropylene, nylon or polyethylene terephthalate (PET), or an absorbent material such as paper or a wood product.

### BEST MODE FOR CARRYING OUT THE INVENTION

A polyurethane for printing ink binders of the present invention is prepared via a step of ring opening polymerization of an initiator (a) having at least two active hydrogen groups per molecule with a mixture of a dicarboxylic acid anhydride (b) and an alkylene oxide (c) to obtain a polyesterether polyol (A1), a step of reacting a polyol (A) including the polyesterether polyol (A1) with a polyisocyanate (B) to obtain an isocyanate-terminated prepolymer (U1), a step of reacting the isocyanate-terminated prepolymer (UI) with a chain extender (C) to obtain a polyurethane (UIH).

### [POLYOL (A)]

The polyol (A) includes the specific polyesterether polyol (A1) as a part or whole of it. "Polyesterether polyol" means a polyol having both ester bond and ether bond. The polyesterether polyol (A1) of the present invention is obtained by ring opening polymerization of an initiator (a) with a mixture of a dicarboxylic acid anhydride (b) and an alkylene oxide (c), and is comprised of a constituting unit derived from the initiator (a), a constituting unit derived from the dicarboxylic acid anhydride (b), and a constituting unit derived from an alkylene oxide (c). In a case where the polyesterether polyol (A1) is used, the above-mentioned polyurethane for printing ink binders becomes excellent in solubility in a solvent having a low solvency and excellent also in adhesion to various films for food packaging. Further, the constituting unit derived from the initiator (a) means a residue obtained by removing an active hydrogen group (usually a hydroxy group) from the initiator (a), and the constituting unit derived from the dicarboxylic acid anhydride (b) means a divalent group obtained by ring opening of the dicarboxylic acid anhydride (b), and the constituting unit derived from the alkylene oxide (c) means a divalent group obtained by ring opening of the alkylene oxide (c).

### [INITIATOR (a)]

The initiator (a) is a compound having at least two active hydrogen groups per molecule, and may, for example, be a polyether polyol, a polyhydric alcohol, a polyoxytetramethylene glycol, a polyester polyol or a polycarbonate polyol. The number of active hydrogen groups per molecule of the initiator (a) is preferably from 2 to 4, more preferably 2 or 3.

As the initiator (a), a polyhydric alcohol may be used as it is, or a polyether polyol obtained by further addition polymerization of an alkylene oxide with a polyhydric alcohol may be used. As an active hydrogen group of the initiator (a), a hydroxy group is particularly preferred.

The polyether polyol is preferably a compound obtained by addition polymerization of an alkylene oxide with a polyhydric alcohol and having a molecular weight per hydroxy group of from 300 to 4,000. At the time of producing the after-mentioned polyesterether polyol (A1), in a case where a composite metal cyanide complex catalyst is used as a catalyst, it is preferred to use a polyether polyol, more preferred to use a polyether diol, as the initiator (a).

As the polyhydric alcohol, ethylene glycol, diethylene glycol, polyethylene glycol, propylene glycol, dipropylene glycol, 1,4-butanediol or glycerol may, for example, be mentioned.

As the alkylene oxide, a C₂₋₄ alkylene oxide is preferred, and, for example, propylene oxide, 1,2-butylene oxide, 2,3-butylene oxide or ethylene oxide may be mentioned. Alkylene oxides may be used alone or in combination of two or more of them. As the alkylene oxide, it is preferred to use ethylene oxide or propylene oxide, and it is more preferred to use only propylene oxide.

As the polyoxytetramethylene glycol, a compound obtained by cationic polymerization of tetrahydrofuran or 3-methyl-tetrahydrofuran may, for example, be mentioned.

As the polyester polyol, a polyester polyol obtained by dehydration condensation of a dihydric alcohol and a dibasic acid, or a polyester polyol obtained by ring opening polymerization of a cyclic ester compound, may be mentioned. As the above-mentioned dihydric alcohol, ethylene glycol, diethylene glycol, 1,2-propandiol, 1,4-butanediol, neopentyl glycol or 1,6-hexanediol may, for example, be mentioned. As the above-mentioned dibasic acid, adipic acid, sebacic acid, maleic acid, phthalic acid, phthalic anhydride, isophthalic acid, terephthalic acid or succinic acid may, for example, be mentioned. As the above-mentioned cyclic ester compound, ε-caprolactone may, for example, be mentioned.

The molecular weight (number average molecular weight) of the initiator (a) is preferably from 62 to 4,000, and more preferably from 400 to 2,000. If the above-mentioned molecular weight is at least 62, good flexibility may be obtained in a printing membrane formed by using a printing ink containing an obtainable polyurethane as a binder (hereinafter may be referred to as the printing membrane). If the flexibility of the printing membrane is good, the followability of the printing membrane to a substrate becomes good, for example, in a case where it is printed on a film substrate.

Further, the above-mentioned molecular weight being at most 4,000 is preferred with a view to improving the adhesion of the obtainable printing membrane to the film (substrate).

In the polyesterether polyol (A1), the content of a constituting unit derived from the initiator (a) is preferably from 1 to 60 mass%, more preferably from 10 to 60 mass%. When the content of a constituting unit derived from the initiator (a) is at least 1 mass%, the desired polyesterether polyol (A1) is easily obtainable. Further, when the content of a constituting unit derived from the initiator (a) is at most 60 mass%, the content of the dicarboxylic acid anhydride (b) in the polyesterether polyol

(A1) may be made large enough to improve the adhesion of the obtainable printing membrane to the film.

### [DICARBOXYLIC ACID ANHYDRIDE (b)]

As the dicarboxylic anhydride (b), phthalic anhydride, hexahydrophthalic anhydride, 1,2,3,6-tetrahydrophthalic anhydride, 3 or 4-methyl-hexahydrophthalic anhydride, 3 or 4-methyltetrahydrophthalic anhydride, maleic anhydride, succinic anhydride or himic anhydride may, for example, be mentioned. Among them, phthalic anhydride having an aromatic ring and hexahydrophthalic anhydride as an alicyclic acid anhydride are particularly preferred.

In the polyesterether polyol (A1), the content of a constituting unit derived from the dicarboxylic acid anhydride (b) is preferably from 10 to 50 mass%, further preferably from 15 to 40 mass%. When the content of a constituting unit derived from the dicarboxylic acid anhydride (b) is at least 10 mass%, good adhesion of the printing membrane to the film is easily obtainable. Further, when the content of a constituting unit derived from the dicarboxylic acid anhydride (b) is at most 50 mass%, a polyurethane excellent in solubility to a solvent having a low solvency may be obtained.

### [ALKYLENE OXIDE (c)]

As the alkylene oxide (c), an alkylene oxide used for synthesis of the polyether polyol as the above-mentioned initiator (a) may be mentioned. It is particularly preferred to use propylene oxide or ethylene oxide.

The polyesterether polyol (A1) is obtained by reacting an initiator (a) with a mixture of an alkylene oxide (c) and a dicarboxylic acid anhydride (b). The molar ratio of the alkylene oxide (c) and the dicarboxylic acid anhydride (b) which are used for synthesis of the polyesterether polyol (A1) is [amount (mol) of the alkylene oxide (c)]/[amount (mol) of the dicarboxylic acid anhydride (b)]=preferably from 50/50 to 95/5, and further preferably from 55/45 to 90/10. When the molar ratio of the alkylene oxide (c) to the dicarboxylic acid anhydride (b) is at least the above-mentioned lower limit, the amount of unreacted dicarboxylic acid anhydride (b) in the polyesterether polyol (A1) can be suppressed, and the acid value of the polyesterether polyol (A1) can be made low. Further, when the molar ratio of the alkylene oxide (c) to the dicarboxylic acid anhydride (b) is at most the above-mentioned upper limit, the adhesion strength of the obtainable printing membrane to the film increases.

Further, by using an excess amount of the alkylene oxide (c) with respect to an equimolar amount of the dicarboxylic acid anhydride (b), and then conducting addition reaction of the alkylene oxide (c) in block at the terminals, it is possible to reduce the acid value of an obtainable polyesterether polyol (A1).

Further, in a copolymerized chain (a portion where the dicarboxylic acid anhydride (b) and the alkylene oxide (c) have been copolymerized) of the polyesterether polyol (A1), the dicarboxylic acid anhydride (b) and the alkylene oxide (c) may have undergone addition reaction alternately, or the alkylene oxide (c) may have undergone addition reaction in block. However, as between the dicarboxylic acid anhydride (b) and the alkylene oxide (c), the dicarboxylic acid anhydride (b) is superior in reactivity and also the dicarboxylic acid anhydride (b) does not undergo addition reaction each other continuously, whereby the number of the alkylene oxide (c) constituting a block chain in the copolymerized chain is small. Therefore, by adjusting the molecular weight of the initiator (a) and the addition amount of the alkylene oxide (c) at the terminal portion, it is possible to design the overall structure of the polyesterether polyol (A1).

Further, particularly in a case where a polyhydric alcohol is used as the initiator (a), at the time of production of the polyesterether polyol (A1), it is preferred to use an excess molar amount of the alkylene oxide (c) over the dicarboxylic acid anhydride (b) since the residual amount of unreacted dicarboxylic acid anhydride can be reduced.

In the production of the polyesterether polyol (A1), it is preferred to use a catalyst, since the polymerization reaction rate is thereby high.

As such a catalyst, a ring opening addition polymerization catalyst is suitably used, and an alkali catalyst such as potassium hydroxide or cesium hydroxide, a composite metal cyanide complex catalyst, or a phosphazene catalyst may, for example, be mentioned. It is further preferred to use a composite metal cyanide complex catalyst, since it is thereby possible to obtain a polyesterether polyol (A1) having a smaller value of Mw/Mn (weight average molecular weight/number average molecular weight).

As such a composite metal cyanide complex catalyst, one having an organic ligand coordinated to a zinc hexacyanocobaltate complex, is preferred. As the organic ligand, an ether such as ethylene glycol dimethyl ether or diethylene glycol dimethyl ether, or an alcohol such as tert-butyl alcohol, is preferred.

The hydroxyl value of the polyesterether polyol (A1) is preferably from 10 to 250 mgKOH/g, more preferably from 15 to 200 mgKOH/g, further preferably from 20 to 150 mgKOH/g.

When the hydroxyl value is at least 10 mgKOH/g, the cohesive power of the obtainable polyurethane (urethane resin ink binder) increases, and the viscosity of a resin solution having the polyurethane dissolved in a solvent, tends to be low. As the cohesive power of the polyurethane increases, the membrane strength becomes high and the adhesion increases, such being preferred.

Further, when the hydroxyl value is at most 250 mgKOH/g, the flexibility of the obtainable polyurethane membrane (printing membrane) tends to be increased.

Further, the molecular weight per hydroxy group of the polyesterether polyol (A1) as calculated by hydroxyl value is preferably from 224 to 5,610, more preferably from 280 to 3,740, further preferably from 374 to 2,810. When the molecular weight as calculated by hydroxyl value is at least 224, the flexibility of the obtainable polyurethane membrane (printing membrane) will be improved. Further, when the molecular weight as calculated by hydroxyl value per hydroxy group is at most 5,610, the cohesive power of the obtainable polyurethane will be increased, and the viscosity of a resin solution having the polyurethane dissolved in a solvent, tends to be low.

The molecular weight as calculated by hydroxyl value and the hydroxyl value of the polyesterether polyol (A1) can be easily controlled by appropriately adjusting the molar amounts of the dicarboxylic acid anhydride (b) and the alkylene oxide (c) to be copolymerized with the initiator (a).

Further, the average molecular weight per copolymerized chain (M') of the polyesterether polyol (A1) is obtained as a value obtained by deducting from the molecular weight as calculated by hydroxyl value, the molecular weight of the initiator (a) and then dividing the remaining molecular weight by the functionality of the initiator (a). The average molecular weight per copolymerized chain (M') is preferably from 50 to 3,000, more preferably from 100 to 1,800. The average molecular weight per copolymerized chain (M') means an average molecular weight per one copolymerized chain formed by copolymerization of the dicarboxylic acid anhydride (b) and the alkylene oxide (c).

When the average molecular weight per copolymerized chain (M') is at least 50, the flexibility of the obtainable polyurethane membrane (printing membrane) will be increased. Further, if the average molecular weight per copolymerized chain (M') is at most 3,000, the viscosity of the polyesterether polyol (A1) will not become too high. The average molecular weight per copolymerized chain (M') can be easily controlled, in the same manner as the molecular weight as calculated by hydroxyl value, by appropriately adjusting the molar amounts of the dicarboxylic acid anhydride (b) and the alkylene oxide (c) to be copolymerized with the initiator (a).

The acid value of the polyesterether polyol (A1) is preferably at most 2.0 mgKOH/g, more preferably at most 1.0 mgKOH/g, and may be zero. When the acid value of the polyesterether polyol (A1) is at most 2.0 mgKOH/g, the reactivity with a polyisocyanate compound becomes good, and the hydrolysis resistance of the obtainable polyurethane (urethane resin ink binder) will be improved.

In order to increase the flexibility of the polyurethane membrane (printing membrane), to improve the solubility in a solvent having a low solvency and to prevent deterioration of the adhesion to various films for food packaging, the proportion of the polyesterether polyol (A1) in the polyol (A) is preferably at least 10 mass%, more preferably at least 50 mass%, and most preferably the entire polyol (A) is the polyesterether polyol (A1).

As the polyesterether polyol (A1), one type may be used alone or two or more types may be used in combination.

In a case where a portion of the polyol (A) is the polyesterether polyol (A1), it is preferred to use, as the rest of the polyol (A), one or more members selected from the group consisting of a polyoxytetramethylene polyol, a polyoxyalkylene polyol, a polyester polyol and a polycarbonate polyol.

### [POLYISOCYANATE (B)]

The polyisocyanate (B) may, for example, be an aromatic polyisocyanate such as naphthalene 1,5-diisocyanate, polyphenylene polymethylene polyisocyanate, 4,4'-diphenylmethane diisocyanate, 2,4-tolylene diisocyanate (hereinafter referred to as 2,4-TDI) or 2,6-tolylene diisocyanate (hereinafter referred to as 2,6-TDI); an aralkyl polyisocyanate such as xylylene diisocyanate or tetramethylxylylene diisocyanate; an aliphatic polyisocyanate such as hexamethylene diisocyanate (hereinafter referred to as HDI); an alicyclic polyisocyanate such as isophorone diisocyanate (hereinafter referred to as IPDI) or 4,4'-methylenebis(cyclohexyl isocyanate); or a modified product such as an urethane modified product, a bullet modified product, an allophanate modified product, a carbodiimide modified product or an isocyanurate modified product, obtainable from such a polyisocyanate.

Among them, as the polyisocyanate (B), one having two isocyanate groups is preferred, and hexamethylene diisocyanate, isophorone diisocyanate, 2,4-tolylene diisocyanate or 2,6-tolylene diisocyanate is particularly preferred.

As the polyisocyanate (B), one type may be used alone or two or more types may be used in combination.

Further, in a case where the polyurethane of the present invention is to be used for a white or pale color ink binder, it is preferred to use a non-yellowing type polyisocyanate as the polyisocyanate (B). For example, an aliphatic polyisocyanate such as hexamethylene diisocyanate, 2,2,4-trimethyl-hexamethylene diisocyanate or 2,4,4-trimethyl-hexamethylene diisocyanate; an alicyclic polyisocyanate such as isophorone diisocyanate or methylenebis(4-cyclohexyl isocyanate); or an aralkyl polyisocyanate such as xylylene diisocyanate may be mentioned.

### [ISOCYANATE GROUP-TERMINATED PREPOLYMER (UI)]

In the present invention, an isocyanate group-terminated prepolymer (UI) is produced by reacting the polyol (A) and the polyisocyanate (B) in such a ratio that the isocyanate group is in excess (hereinafter this reaction is referred to as the prepolymer production reaction).

As a specific example of the prepolymer production reaction, a reaction by heating the polyol (A) and the polyisocyanate (B) in a dry nitrogen stream for from 1 to 20 hours at from 60 to 100°C, preferably from 70 to 95°C, may be mentioned.

At the time of the prepolymer production reaction, an urethane-forming reaction catalyst may be used.

As the urethane-forming reaction catalyst, an organic tin compound such as dibutyltin dilaurate, dioctyltin dilaurate, dibutyltin dioctoate or stannous 2-ethylhexanoate; an iron compound such as iron acetylacetonate or ferric chloride; or a tertiary amine type catalyst such as triethylamine or triethylenediamine may, for example, be mentioned. Among such urethane-forming reaction catalysts, the organic tin compound is preferred.

Further, at the time of the prepolymer production reaction, a solvent may be used for dilution. As such a solvent, an ester such as ethyl acetate or butyl acetate; a ketone such as methyl ethyl ketone (hereinafter referred to as MEK), methyl isobutyl ketone or cyclohexanone; an aromatic hydrocarbon such as toluene or xylene; an aliphatic hydrocarbon such as hexane; or dimethyl formamide may, for example, be mentioned. These solvents may be used alone or in combination of two or more of them.

Among such solvents, ethyl acetate is more preferred.

The ratio of the polyol (A) and the polyisocyanate (B) in the prepolymer production reaction is preferably from 1.1 to 8, more preferably from 1.2 to 5, as the isocyanate group/hydroxy group (molar ratio). When the isocyanate group/hydroxy group (molar ratio) is at least 1.1, gelation hardly occurs and the viscosity does not become high, whereby a molecular weight suitable for a prepolymer to be used for the production of a polyurethane becomes easily obtainable. On the other hand, when the above-mentioned molar ratio is at most 8, the amount of a diisocyanate monomer in the obtainable isocyanate group-terminated prepolymer does not become too high and the viscosity also does not become too low, whereby it becomes easy to handle such a prepolymer.

In the isocyanate group-terminated prepolymer (UI) obtained by the prepolymer-forming reaction, the isocyanate group content is preferably from 1.5 to 10.0 mass%, more preferably from 1.8 to 6.0 mass%.

Further, the weight average molecular weight (Mw) of the isocyanate group-terminated prepolymer (UI) is preferably from 2,500 to 30,000, more preferably from 3,000 to 25,000, further preferably 5,000 to 20,000. When the weight average molecular weight (Mw) is at least 2,500, the adhesion of the printing membrane becomes excellent. When the weight average molecular weight (Mw) is at most 30,000, the cohesive power of obtainable polyurethane becomes excellent.

The weight average molecular weight (Mw) and the number average molecular weight (Mn) of the present invention are the values measured by gel permeation chromatography as calculated as polystyrene (the same applies hereinafter).

### [POLYURETHANE (UIH)]

In the present invention, a polyurethane (UIH) is obtained by reacting the isocyanate group-terminated prepolymer (UI) with the chain extender (C) (hereinafter this reaction is referred to as the chain extension reaction). After the chain extention reaction, a chain terminator (D) may be reacted (hereinafter this reaction is referred to as the termination reaction), as the case requires.

### [CHAIN EXTENDER (C)]

As the chain extender (C), a various known one having two or more active hydrogen groups (i.e. functional groups reactive with an isocyanate group) may be used. Ethylenediamine, propylenediamine, hexamethylenediamine, isophoronediamine, bis(4-aminocyclohexyl)methane, triethylenetetramine, diethylenetriamine or dimerdiamine may, for example, be mentioned.

In addition, as the case requires, a diamine having a hydroxy group in its molecule such as 2-hydroxyethylethylenediamine or 2-hydroxyethylpropyldiamine; a glycol such as ethylene glycol, propylene glycol, 1,4-butanediol or 1,6-hexanediol, may be mentioned. These chain extenders (C) may be used alone or in combination of two or more of them.

Among them, one having two amino groups is preferred in view of high reactivity and easiness to make the molecular weight high.

### [CHAIN EXTENSION REACTION]

The method of chain extension reaction is not particularly limited, and it may, for example, be (1) a method in which an isocyanate group-terminated prepolymer (UI) solution is introduced into a reaction vessel and then a chain extender (C) is dropwisely added to the reaction vessel for reaction, (2) a method in which a chain extender (C) is introduced into a reaction vessel and then an isocyanate group-terminated prepolymer (UI) solution is dropwise added for reaction, or (3) a method in which an isocyanate group-terminated prepolymer (UI) solution is diluted by a solvent and then a predetermined amount of a chain extender (C) is introduced all at once into the reaction vessel for reaction. The method (1) or (3) is preferred, in view of easiness in obtaining a polyurethane (UIH) having a uniform chain length due to a gradual decrease of the isocyanate group.

As the above-mentioned solvent, a solvent which is the same as the solvent exemplified in the above prepolymer-forming reaction, may be used. Further, in a case where a diamine is used as the chain extender (C), an alcoholic solvent such as isopropyl alcohol, ethanol or n-propanol may preferably be used together to increase the solubility of the produced polyurethaneurea resin. In view of the reactivity with isocyanate, solubility and volatility, isopropyl alcohol is more preferred.

The amount of the chain extender (C) to be added may depend on the isocyanate group content of the isocyanate group-terminated prepolymer (UI). However, the molar ratio value of the isocyanate group to the functional group reactive with the isocyanate group in the chain extender (C) i.e. "isocyanate group/functional group (molar ratio)" is preferably from 0.8 to 1.2, more preferably from 0.9 to 1.1. When the above isocyanate group/functional group (molar ratio) is at least the lower limit of the above-mentioned range, it is easy to prevent gelation caused by rapid viscosity rise at the time of the chain extension reaction. On the other hand, when the above-mentioned molar ratio is at most the upper limit of the above-mentioned range, the chain extension reaction proceeds sufficiently, whereby it becomes easy to obtain a desired molecular weight.

The reaction temperature for the chain extension reaction is preferably at most 80°C. When the reaction temperature is higher than 80°C, control of the reaction becomes difficult since the reaction rate becomes too high, and it tends to be difficult to obtain a polyurethene (UIH) having a desired molecular weight and a desired structure. In a case where the chain extension reaction is conducted in the presence of a solvent, it is preferred to control the reaction temperature to be at most the boiling temperature of the solvent. Particularly, in the presence of MEK and/or ethyl acetate, the reaction temperature is preferably from 40 to 60°C.

### [TERMINATION REACTION]

After the chain extension reaction, as the case requires, a termination reaction may be conducted by adding the chain terminator (D). In some cases, the reaction may be conducted by mixing the chain terminator (D) at the time of the chain extension reaction.

The chain terminator is a compound having a functional group which can react with an isocyanate group and may, for example, be an amine such as a C₂₋₈ mono- or di-alkylamine (butylamine, dibutylamine or the like); a monoalcohol such as methanol, ethanol, butanol or propanol; a C₂₋₆ mono- or di-alkanolamine (monoethanolamine, diethanolamine or propanolamine).

The amount of the chain terminator (D) to be added is preferably such that the proportion of the chain terminator becomes from 1 to 2 mol per mol of the terminal isocyanate group which remains after the chain extension reaction. If the amount of the chain terminator (D) is less than 1 mol per mol of the terminal isocyanate group which remains after the chain extension reaction, an obtainable polyurethane (UHI) tends to be unstable since the isocyanate group remains after the terminal reaction. On the other hand, if the amount of the chain terminator (D) exceeds 2 mol per mol of the terminal isocyanate group which remains after the chain extension reaction, the amount of a low molecular weight compound tends to increase.

The weight average molecular weight (Mw) of the polyurethane (UIH) is, in view of the flexibility and durability of a printing membrane, preferably at least 30,000, more preferably at least 40,000. In view of the coatability, the weight average molecular weight (Mw) is preferably at most 300,000, more preferably at most 250,000.

### <PRINTING INK>

A printing ink containing the polyurethane of the present invention may be obtained by mixing and dispersing a polyurethane (UIH) obtained by the above-mentioned production method, a coloring agent, a solvent, and as the case requires, a resin other than an urethane resin, a filler, an additive, etc.

As the amount of the polyurethane (UIH) to be incorporated, the resin solid content of the polyurethane (UIH) in a printing ink is preferably from 5 to 30 mass%, more preferably from 7 to 25 mass%.

As the coloring agent, various ones which are commonly used for printing inks such as an organic pigment, an inorganic pigment and a dye, may be used.

The amount of the coloring agent to be incorporated is preferably from 50 to 300 parts by mass, more preferably from 70 to 200 parts by mass, based on 100 parts by mass of the polyurethane resin solid content.

As the organic pigment, permanent red 2B, phthalocyanine red, quinacridone magenta, phthalocyanine blue, aniline black or the like may be mentioned.

As the inorganic pigment, carbon black, titanium oxide, red oxide or the like may be mentioned.

As the solvent for the printing ink, a conventional solvent having a relatively high solvency, a solvent having a low solvency, or a mixture of them, may be used. From the viewpoint of environmental conservation, it is preferred to use only a solvent having a low solvency. As the solvent having a relatively high solvency, an aromatic hydrocarbon such as toluene or xylene; a ketone such as acetone, methyl ethyl ketone (MEK), methyl isobutyl ketone or cyclohexanone; an amide such as dimethylformamide or dimethylacetamide may be mentioned. Further, as the solvent having a low solvency, an ester such as ethyl acetate, butyl acetate or propylene glycol monomethyl ether acetate; an alcohol such as isopropyl alcohol, n-propyl alcohol or ethanol; an aliphatic hydrocarbon such as hexane, ethylcyclohexane or mineral spirit, may be mentioned. They may be used alone or in combination as a mixture of two or more of them.

Among the solvents, for the stability of the printing ink, an ester or an alcohol is preferred, and ethyl acetate or isopropyl alcohol is particularly preferred.

The amount of the solvent to be used is from 30 to 80 mass%, and preferably from 40 to 70 mass%, based on the total amount (100 mass%) of the printing ink.

As the resin other than an urethane resin, polyamide, nitrocellulose, polyvinyl chloride, xylene resin or the like may be mentioned.

As the filler, aluminium hydroxide, calcium carbonate, magnesium carbonate, silica, glass, fiber flake or the like may be mentioned.

As the stabilizer, an anti-oxidant, an ultraviolet absorber or a light stabilizer may, for example, be mentioned.

The printing ink may be one component type which uses the polyurethane (UIH) alone as a curing component. Otherwise, it may be a two component type which uses the polyurethane (UIH) and a polyisocyanate type curing agent in combination.

In the case of the two component type, a main component wherein the polyurethane (UIH), a coloring agent, a solvent, etc. are mixed and dispersed, and a curing agent, are separately prepared, and they are mixed just before use and coated (printed) on a substrate at room temperature. Thereafter, drying by heating is conducted to evaporate the solvent and to increase the temperature, whereby a reaction between the polyurethane (UIH) and the curing agent proceeds to obtain a printing membrane (cured membrane). By the use of the curing agent, the adhesion to the substrate and the physical property of the printing membrane will be improved.

As the curing agent, in view of easiness in formation of a crosslinked structure, one having an average number of more than two functional groups is preferred. For example, DURANATE TPA-100 (manufactured by ASAHI KASEI CHEMICALS CORPORATION, isocyanurate type HDI, isocyanate content: 23.1 mass%, solid content concentration: 100 mass%), DURANATE P301-75E (manufactured by ASAHI KASEI CHEMICALS CORPORATION, trimethylolpropane adduct type HDI, isocyanate content: 12.9 mass%, solid content concentration: 75 mass%), MITECH NY-210A (manufactured by Mitsubishi Chemical Corporation, trimethylolpropane adduct type IPDI, isocyanate content: 10.0 mass%, solid content concentration: 75 mass%), CORONATE L (manufactured by NIPPON POLYURETHANE INDUSTRY CO., LTD., trimethylolpropane adduct type TDI, isocyanate content: 13.5 mass%, solid content concentration: 75 mass%) may be used as the curing agent.

The substrate for printing is preferably a non-absorbent film material such as polyethylene, polypropylene, nylon or polyethylene terephthalate (PET). Further, the printing is applicable also to an absorbent material such as paper or a wood product.

As the applicable printing method, gravure printing, screen printing, flexographic printing, etc. may be mentioned.

The polyurethane of the present invention is well soluble in a solvent having relatively high solvency such as toluene or methyl ethyl ketone, and is also excellent in solubility in a solvent having a low solvency such as ethyl acetate or isopropyl alcohol. Further, due to good affinity with the solvent, the viscosity of the resin solution tends to be low. Further, the cured membrane of the polyurethane of the present invention is excellent in the adhesion to a film.

Therefore, by using the polyurethane of the present invention as a printing ink binder, it is possible to obtain an ink binder excellent in both aspects of consideration for environmental conservation of global scale and high quality. For example, it is possible to obtain a printing ink suitable for gravure printing on various films for food packaging.

The reason why such an effect can be obtained is not clear. However, as shown in after-mentioned Examples, in Comparative Examples wherein a polyether polyol, a polyester polyol or a polyesterether polyol which does not use a dicarboxylic acid anhydride (b) is used instead of the specific polyesterether polyol (A1) of the present invention, it is difficult to simultaneously satisfy both of the solubility in a solvent having a low solvency and the adhesion to a film substrate. On the other hand, it is conceivable that in the present invention; the use of a polyesterether polyol (A1) containing a dicarboxylic acid anhydride (b) contributes to the above-mentioned effect.

Particularly, it is considered that by the use of the dicarboxylic acid anhydride (b) as a copolymerization component, a polyesterether polyol (A1) having an ester backbone can be obtained, and a coagulation property is increased by such an ester backbone, whereby the adhesion to a film substrate is improved. Further, it is considered that the solubility of it to a solvent becomes higher than that of a polyester polyol by randomly introducing the ester backbone.

### EXAMPLES

Now, the present invention will be described in further detail with reference to Examples, but it should be understood that the present invention is by no means restricted thereto. Further, in following Examples, "parts" means "parts by weight" unless otherwise specified.

### [PRODUCTION EXAMPLE 1: Preparation of polyesterether diol (A1-1)]

In the present example, a polyesterether diol (A1-1) was produced by using a zinc hexacyanocobaltate-tert-butyl alcohol complex as the catalyst (x), polyoxypropylene diol as the initiator (a), phthalic anhydride (PA) as the polycarboxylic acid anhydride (b) and propylene oxide (PO) as the alkylene oxide (c).

That is, into a pressure resistant reactor equipped with a stirrer and a nitrogen-introducing tube, 2,000 g of polyoxypropylene diol was introduced. Then, 800 g (5.4 mol) of phthalic anhydride (PA) was introduced into the above-mentioned reactor, followed by stirring. Then, 0.4 g of the zinc hexacyanocobaltate-tert-butyl alcohol complex (DMC-TBA complex) was added, followed by a reaction for 7 hours at 130°C in a nitrogen atmosphere while further adding 1,200 g (20.6 mol) of propylene oxide (PO) slowly. Then, after confirming termination of reduction in the internal pressure of the reactor, the product was taken out from the reactor to obtain a polyesterether diol (A1-1) (hydroxyl value: 58.3 mgKOH/g) having phthalic anhydride and propylene oxide polymerized to the terminal end of polyoxypropylene diol. From the result of ¹H-NMR measurement of the polyesterether diol (A1-1), the polyesterether diol (A1-1) was found to have a polymerized chain of phthalic anhydride and propylene oxide.

Table 1 shows the hydroxyl value and functionality of the initiator (a), the amount (charged amount by mass) of each of (a), (b), (c) and (x) and the molar ratio in the charged amount of (c)/(b), and the respective values of the obtained polyesterether diol, the content of (b), the hydroxyl value, the molecular weight as calculated by hydroxyl value, the molecular weight as calculated by hydroxyl value per hydroxy group, the value (M') obtained by deducting the molecular weight of the initiator from the molecular weight as calculated by hydroxyl value and then dividing the remaining molecular weight by the functionality of the initiator, the acid value and the viscosity, in this Example.

The value of the viscosity is a value (unit: mPa·s) obtained by the measurement under a condition of 25°C by using E-type viscometer in accordance with JIS-K1557 (1970 edition).

### [PRODUCTION EXAMPLES 2 to 6: Preparation of polyesterether diols (A1-2) to (A1-6)]

Polyesterether diols (A1-2) to (A1-6) were obtained in the same manner as in Production Example 1 except that the hydroxyl value of an initiator (a) and the blend amount of each of (a), (b), (c) and (x) were changed as shown in Table 1. In Production Example 6, hexahydrophthalic anhydride (HPA) was used as the polycarboxylic acid anhydride (b), instead of phthalic anhydride (PA).

In the same manner as in Production Example 1, the hydroxyl value and the functionality of the initiator (a), the charged amount of each of (a), (b), (c) and (x) and the molar ratio in the charged amount of (c)/(b), and the respective physical property values of the obtained polyesterether diols (A1-2) to (A1-6) are shown in Table 1.

**TABLE 1**

| | | | Unit | Pro. Ex. 1 | Pro. Ex. 2 | Pro. Ex. 3 | Pro. Ex. 4 | Pro. Ex. 5 | Pro. Ex. 6 |
|---|---|---|---|---|---|---|---|---|---|
| Polyesterether polyol (A1) | | | | A1-1 | A1-2 | A1-3 | A1-4 | A1-5 | A1-6 |
| Hydroxyl value of initiator (a) | | | mgKOH/g | 112 | 160 | 112 | 160 | 112 | 160 |
| Functionality of initiator (a) | | | Number | 2 | 2 | 2 | 2 | 2 | 2 |
| Blend | Charged amount of initiator (a) | | g | 2,000 | 1,435 | 1,913 | 700 | 2,000 | 1,400 |
| | Molar ratio in the charged amount of (c)/(b) | | - | 79/21 | 75/25 | 59/41 | 82/18 | 86/14 | 85/15 |
| | (c) | Charged amount of added PO | g | 1,200 | 1,451 | 899 | 2,100 | 1,400 | 1,800 |
| | (b) | Charged amount of added PA | g | 800 | 1,241 | 1,588 | 1,200 | 600 | - |
| | | Charged amount of added HPA | g | - | - | - | - | - | 800 |
| | Charged amount of catalyst (x) | | g | 0.40 | 0.40 | 0.44 | 0.40 | 0.40 | 0.40 |
| | Content of (b) in (A1) | | mass% | 20 | 30 | 36 | 30 | 15 | 20 |
| Properties of (A1) | Hydroxyl value | | mgKOH/g | 58.3 | 59 | 50 | 31 | 56.1 | 59.0 |
| | Molecular weight as calculated by hydroxyl value | | - | 1,930 | 1,900 | 2,200 | 3,600 | 2,000 | 1,900 |
| | Molecular weight as calculated by hydroxyl value per hydroxy group | | - | 965 | 950 | 1,100 | 1,800 | 1,000 | 950 |
| | M' | | - | 464 | 599 | 600 | 1,449 | 500 | 600 |
| | Acid value | | mgKOH/g | 0.11 | 0.14 | 0.82 | 0.17 | 0.10 | 0.05 |
| | Viscosity (25°C) | | mPa·s | 4,500 | 26,200 | Over 100,000 | 70,000 | 2,200 | 1,900 |

| | | | | | | | | | |
|---|---|---|---|---|---|---|---|---|---|
| M' = (Molecular weight as calculated by hydroxyl value - Molecular weight of initiator) / Functionality PO: Propylene oxide PA: Phthalic anhydride HPA: Hexahydrophthalic anhydride | | | | | | | | | |

### [EVALUATION OF SOLUBILITY]

The solubilities of polyesterether diols (A1-1, A1-2, A1-6) prepared in Production Example 1, 2 and 6 and the following comparative polyols 1 to 4 were evaluated by the following method in each of the following solvents.

At first, a solvent was added to a polyol so that the mass ratio of polyol/solvent became 9/1, 7/3 and 5/5, and then 10 g in total of the solution was preliminarily mixed by spatula. Then, it was mixed for 15 minutes by tube mixer TRIO (manufactured by AS ONE Corporation, product name: HM-1 S), and after confirming that it was mixed uniformly, it was stored quietly for 24 hours. A resin solution thus obtained was visually observed and evaluated by the following evaluation standards. The obtained results are shown in Table 2.

○: transparent, Δ: opaque white, ×: separated or solid state, (Δ): a case where evaluation is impossible because a polyol per se becomes opaque white at room temperature.

Further, the solubility of a polyol in a solvent serves as an index of the solubility of a polyurethane (UIH) to be obtained by reacting an isocyanate group-terminated prepolymer (UI) obtained by using such a polyol, with a chain extender (C). That is, when a polyol has good solubility in a solvent, it can be evaluated that a polyurethane (UIH) synthesized by using the polyol has good solubility in the solvent.

### [COMPARATIVE POLYOLS 1 to 4]

Comparative polyol 1: polyoxypropylene diol having a number average molecular weight of 2,000 obtained by addition polymerization of propylene oxide by using polypropylene glycol as the initiator in the presence of zinc hexacyanocobaltate-tert-butyl alcohol complex as the catalyst (abbreviated as PPG-2000).

Comparative polyol 2: poly 3-methylpentene adipate (manufactured by KURARAY CO., LTD., product name: KURAPOL P-2010, number of hydroxy groups: 2, number average molecular weight: 2,000, abbreviated as PMPA-2000).

Comparative polyol 3: polyesterether diol having a number average molecular weight of 2,000 obtained by addition polymerization of propylene oxide by using poly 3-methylpentene adipate (manufactured by KURARAY CO., LTD., product name: KURAPOL P-1010, number of hydroxy groups: 2, number average molecular weight: 1,000) as the initiator in the presence of zinc hexacyanocobaltate-tert-butyl alcohol complex as the catalyst (abbreviated as PMPA-PO-2000).

Comparative polyol 4: polybutylene adipate (manufactured by NIPPON POLYURETHANE INDUSTRY CO., LTD., product name NIPPORAN 4010, number of hydroxy groups: 2, number average molecular weight: 2,000, abbreviated as PBA2000).

### (SOLVENTS)

Aromatic hydrocarbon type: toluene
Aliphatic hydrocarbon type: ethylcyclohexane, mineral spirit
Alcohol type: isopropyl alcohol (IPA), ethanol, methanol
Ketone type: methyl ethyl ketone (MEK)
Ester type: propylene glycol monomethyl ether acetate, ethyl acetate
Amide type: dimethylformamide (DMF)

**TABLE 2**

| | | Production Example 1 | | | Production Example 2 | | | Production Example 6 | | | Comparative polyol 1 | | | Comparative polyol 2 | | | Comparative polyol 3 | | | Comparative polyol 4 | | |
|---|---|---|---|---|---|---|---|---|---|---|---|---|---|---|---|---|---|---|---|---|---|---|
| Polyol | | A1-1 | | | A1-2 | | | A1-6 | | | PPG2000 | | | PMPA2000 | | | PMPA-PO- | | | PBA2000 | | |
| Polyol/solvent ratio (mass ratio) | | 9/1 | 7/3 | 5/5 | 9/1 | 7/3 | 5/5 | 9/1 | 7/3 | 5/5 | 9/1 | 7/3 | 515 | 9/1 | 7/3 | 5/5 | 9/1 | 7/3 | 5/5 | 9/1 | 7/3 | 5/5 |
| Aromatic hydrocarbon type | Toluene | ○ | ○ | ○ | ○ | ○ | ○ | ○ | ○ | ○ | ○ | ○ | ○ | ○ | ○ | ○ | ○ | ○ | ○ | × | × | × |
| Aliphatic hydrocarbon type | Ethyl-cyclohexane | ○ | △ | × | ○ | × | × | ○ | △ | × | ○ | ○ | ○ | ○ | × | × | ○ | × | × | × | × | × |
| | Mineral spirit | ○ | △ | × | × | × | × | ○ | ○ | △ | ○ | ○ | ○ | × | × | × | ○ | × | × | × | × | × |
| Alcohol type | IPA | ○ | ○ | △ | ○ | ○ | △ | ○ | ○ | △ | ○ | ○ | ○ | ○ | ○ | × | ○ | ○ | ○ | × | × | × |
| | Methanol | ○ | ○ | ○ | ○ | ○ | △ | ○ | ○ | ○ | ○ | ○ | ○ | ○ | ○ | ○ | ○ | ○ | ○ | × | × | × |
| Ketone type MEK | | ○ | ○ | ○ | ○ | ○ | ○ | ○ | ○ | ○ | ○ | ○ | ○ | ○ | ○ | ○ | ○ | ○ | ○ | × | × | × |
| Ester type | Propylene glycol monomethyl ether acetate | ○ | ○ | ○ | ○ | ○ | ○ | ○ | ○ | ○ | ○ | ○ | ○ | ○ | ○ | ○ | ○ | ○ | ○ | × | × | × |
| | Ethyl acetate | ○ | ○ | ○ | ○ | ○ | ○ | ○ | ○ | ○ | ○ | ○ | ○ | ○ | ○ | ○ | ○ | ○ | ○ | × | × | × |
| Amide type | DMF | ○ | ○ | ○ | ○ | ○ | ○ | ○ | ○ | ○ | ○ | ○ | ○ | ○ | ○ | ○ | ○ | ○ | ○ | × | × | × |

From the results of Table 2, the aromatic hydrocarbon type solvent, the ketone type solvent, the ester type solvent and DMF were found to present good solubility to all polyols other than the comparative polyol 4.

As compared with the comparative polyols 2 and 3, polyesterether diols (A1-1) and (A1-6) were found to have the solubility improved in the aliphatic hydrocarbon type solvent and the alcohol type solvent.

The solubility of the polyesterether diol (A1-2) in the aliphatic hydrocarbon solvent and the alcohol type solvent was almost the same as the comparative polyols 2 and 3.

### [EXAMPLE 1: Production of polyurethane (P1)]

A polyol (A1) and a polyisocyanate compound (B) were reacted (prepolymer production reaction) to produce an isocyanate group-terminated prepolymer.

That is, into a 1 L reaction tank made of glass and equipped with a stirring blade, 193 parts by mass of the polyesterether diol (A1-1) produced in Production Example 1 was introduced. Further, 44.4 parts by mass of isophorone diisocyanate (manufactured by DEGUSSA Corporation, product name: VESTANAT IPDI, content of isocyanate group: 37.8 mass%; hereinafter referred to as IPDI) was introduced as a polyisocyanate compound (B) to the reaction tank.

After replacing the interior of the reaction tank with nitrogen, the temperature of the reaction tank was increased to 90°C while stirring the content at 100 revolutions per minute and maintained at 90°C for 2 hours. A portion of the content after the reaction was withdrawn, and the content of the isocyanate group (hereinafter simply referred to as NCO) was measured. After confirming that the content was at most the theoretically calculated content, the reaction was terminated to obtain an isocyanate group-terminated urethane prepolymer.

Then, 237 parts by mass of the prepolymer was diluted by 102 parts by mass of ethyl acetate, and then added the solution having 17.0 parts by mass of chain extender isophorone diamine (manufactured by DEGUSSA Corporation, product name: VESTAMIN IPDA, hereinafter referred to as IPDA) diluted by a mixture solution of 294 parts by mass of ethyl acetate and 198 parts by mass of isopropyl alcohol (IPA). Then, chain extension reaction was conducted while maintaining the temperature at 50°C for 3 hours, and after confirming disappearance of an isocyanate group absorbance at 2,270 cm⁻¹ in the infrared absorption spectrum, the reaction was terminated to obtain a resin solution containing a polyurethane (P1).

The ingredient (unit: parts by mass) at the time of prepolymer production reaction and the molar ratio of isocyanate group/hydroxy group, and the ingredient (unit: parts by mass) at the time of chain extension reaction and the molar ratio of isocyanate group/amino group are shown in Table 3 (the same applies hereinafter). Further, the urethane resin content (parts by mass) in Table 3 corresponds to the total mass of IPDA and the prepolymer.

### [EXAMPLES 2 to 6: Production of polyurethanes (P2) to (P6)]

By using polyesterether diols (A1-2) to (A1-6) prepared in Production Examples 2 to 6, polyurethanes (P2) to (P6) were produced.

That is, resin solutions containing polyurethanes (P2) to (P6) were prepared in the same manner as in Example 1, except that in Example 1, the type and the blend amount of polyol (A1) was changed as shown in Table 3.

### [COMPARATIVE EXAMPLES 1 to 3]

A resin solution containing a polyurethane (R1, R2, R3) was prepared in the same manner as in Example 1, except that in Example 1, each of the above-mentioned comparative polyols 1 to 3 was used in the blend amount as shown in Table 3 respectively, instead of polyesterether diol (A1-1).

**TABLE 3**

| | | | Ex. 1 | Ex. 2 | Ex. 3 | Ex. 4 | Ex. 5 | Ex. 6 | Comp. Ex. 1 | Comp. Ex. 2 | Comp. Ex.3 |
|---|---|---|---|---|---|---|---|---|---|---|---|
| Prepolymer production reaction | Polyol (parts by mass) | A1-1 | 193 | | | | | | | | |
| | | A1-2 | | 190 | | | | | | | |
| | | A1-3 | | | 220 | | | | | | |
| | | A1-4 | | | | 360 | | | | | |
| | | A1-5 | | | | | 200 | | | | |
| | | A1-6 | | | | | | 190 | | | |
| | | Comparative polyol 1 | | | | | | | 200 | | |
| | | Comparative polyol 2 | | | | | | | | 200 | |
| | | Comparative polyol 3 | | | | | | | | | 200 |
| | Polyisocyanate (parts by mass) | IPDI | 44.4 | 44.4 | 44.4 | 44.4 | 44.4 | 44.4 | 44.4 | 44.4 | 44.4 |
| | Isocyanate group/hydroxy group (molar ratio) | | 2.0 | 2.0 | 2.0 | 2.0 | 2.0 | 2.0 | 2.0 | 2.0 | 2.0 |
| Chain extension reaction | IPDA (parts by mass) | | 17.0 | 17.0 | 17.0 | 17.0 | 17.0 | 17.0 | 17.0 | 17.0 | 17.0 |
| | Prepolymer (parts by mass) | | 237 | 234 | 264 | 404 | 244 | 234 | 244 | 244 | 244 |
| | Urethane resin (parts by mass) | | 254 | 251 | 281 | 421 | 261 | 251 | 261 | 261 | 261 |
| | Ethyl acetate (parts by mass) | | 396 | 391 | 438 | 656 | 407 | 391 | 407 | 407 | 407 |
| | IPA (parts by mass) | | 198 | 196 | 219 | 328 | 203 | 196 | 203 | 203 | 203 |
| | Urethane resin solution (parts by mass) | | 848 | 838 | 938 | 1,405 | 871 | 838 | 871 | 871 | 871 |
| | Isocyanate group/amino group (molar ratio) | | 1.0 | 1.0 | 1.0 | 1.0 | 1.0 | 1.0 | 1.0 | 1.0 | 1.0 |

### [PROPERTIES OF POLYURETHANE]

With respect to polyurethanes ((P1) to (P6) and (R1) to (R3)) prepared in Examples 1 to 6 and Comparative Examples 1 to 3, the molecular weights (Mn and Mw), the Mw/Mn values and the viscosities of resin solutions in which the resin solid content was adjusted to 30 mass%, were measured. The obtained results are shown in Table 4.

### [EVALUATION OF CURED FILM]

Each of the resin solutions containing polyurethanes ((P1) to (P6) and (R1) to (R3)) prepared respectively in Examples 1 to 6 and Comparative Examples 1 to 3, was coated on a biaxially-oriented polypropylene film (OPP film) to form a wet coating film (including the solvent) having a thickness of 300 µm. Then, the wet coating film was dried for 3 hours at 60°C to obtain a cured film.

The cured film thus obtained was cut into a prescribed shape by a dumbbell cutter and peeled from the OPP film to obtain a sample for evaluation, and the physical properties as shown in Table 4 were measured. That is, by using the evaluation sample of dumbbell test-piece 3, the tensile test was carried out in accordance with JIS-K7311 (1995 edition) to measure the tensile modulus of elasticity at 100% elongation (100%M, unit: MPa), the tensile modulus of elasticity at 300% elongation (300%M, unit: MPa), the tensile strength (Ts, unit: MPa) and the elongation at break (unit: %). The obtained results are shown in Table 4.

**TABLE 4**

| | | Ex. 1 | Ex. 2 | Ex. 3 | Ex. 4 | Ex. 5 | Ex. 6 | Comp. Ex. 1 | Comp. Ex. 2 | Comp. Ex. 3 |
|---|---|---|---|---|---|---|---|---|---|---|
| Polyol (A1) | | A1-1 | A1-2 | A1-3 | A1-4 | A1-5 | A1-6 | Comparative polyol 1 | Comparative polyol 2 | Comparative polyol 3 |
| Polyurethane | Molecular weight (Mn) | 8,300 | 9,700 | 8,100 | 9,600 | 8,500 | 11,000 | 9,000 | 9,400 | 9,500 |
| | Molecular weight (Mw) | 42,000 | 45,000 | 40,000 | 48,000 | 41,000 | 55,000 | 39,000 | 52,000 | 46,000 |
| | Mw/Mn | 5.1 | 4.6 | 4.9 | 5 | 4.8 | 5.0 | 4.4 | 5.6 | 4.8 |
| | Viscosity [mPa·s] | 330 | 1,400 | 6,500 | 2,800 | 350 | 700 | 1,100 | 12,000 | 3,800 |
| Cured film | 100%M [MPa] | 1.9 | 3.5 | 7.0 | 3.1 | 1.6 | 2.2 | 0.6 | 2.5 | 1.7 |
| | 300%M [MPa] | 4.0 | 8.8 | 18.1 | 5.2 | 3.7 | 5.2 | 1.5 | 4.7 | 3.6 |
| | Tensile strength [MPa] | 7.6 | 29.5 | 33.2 | 26.1 | 7.2 | 21.2 | 4.1 | 23.5 | 8.9 |
| | Elongation at break [%] | 660 | 580 | 450 | 610 | 780 | 700 | 940 | 680 | 810 |

As shown in Table 4, polyurethanes (P1) to (P6) obtained in Examples 1 to 6 were found to have weight average molecular weights of from 40,000 to 50,000 which are almost the same as those of polyurethanes (R1) to (R3) obtained in Comparative Examples 1 to 3. Such polyurethanes (P1 to P6) were found to be excellent in solubility in a mixture solvent of ethyl acetate and isopropyl alcohol, so that resin solutions having a viscosity lower than commercially available PMPA-2000 type urethane of Comparative Example 2 were obtained.

Further, the tensile properties of cured films of polyurethanes (P1) to (P6) obtained in Examples 1 to 6 were found to be far superior to Comparative Example 1. Particularly, in Examples 2 to 4 wherein the blend amount of phthalic anhydride (b) was high at the time of preparing polyesterether polyol (A1), the tensile strength and the tensile modulus of elasticity were superior to the polyester type polyurethane of Comparative Example 2.

### [EVALUATION OF ADHESION OF PRINTING MEMBRANE]

A printing ink comprising the polyurethane ((P1) to (P6) and (R1) to (R3)) obtained in each of Examples 1 to 6 and Comparative Examples 1 to 3, a white pigment, toluene and IPA was prepared. As the white pigment, titanium oxide (manufactured by Ishihara Sangyo Kaisha, Ltd., product name: TIPAQUE CR-50) was used. The blend ratio was set to be 3/5/1/1 by mass ratio of the white pigment/the polyurethane resin solution (resin solid content: 30 mass%)/toluene/IPA.

The printing ink thus obtained was coated on a substrate film and then dried at 60°C for 3 hours to form a printing membrane having a film thickness after drying of about 130 µm.

### (PEEL STRENGTH)

By using a PET film as a substrate, a printing membrane was produced in accordance with the above method. The obtained printing membrane was cut into a rectangular shape of 25 mm in width and 15 cm in length, and the peel strength (unit: N/25 mm) at the time of peeling the cut printing membrane from the substrate film at an angle of 180° was measured by a tensile tester in accordance with JIS-K7311. The obtained results are shown in Table 5.

### (X-CUT METHOD)

The adhesion was evaluated by a X-cut method in accordance with JIS-K5400. A PET film was used as a substrate. The evaluation results were evaluated by 6-grades of 0, 2, 4, 6, 8 and 10, and the larger the numerical value, the better the adhesion. The obtained results are shown in Table 5.

Here, the X-cut method is, in summary, a method to examine the adhesion between a printing membrane and a film substrate by making a X-shaped cut (X-cut) by a cutter knife on the printing membrane formed on the film substrate, bonding an adhesive tape (a cellophane adhesive tape having a width of 18 mm as stipulated in JIS-Z 1522 (manufactured by NICHIBAN CO., LTD.), the same applies hereinafter)) thereon, followed by peeling to examine the adhesion between the printing membrane and the film substrate.

### (CROSS-CUT METHOD)

The adhesion was evaluated by a cross-cut method in accordance with JIS-K5400. Two types of films i.e. a PET film and a nylon film were used as a substrate.

The cross-cut method is a method wherein on a printing membrane formed on the substrate film, a grid-shaped cut is imparted by a cutter knife to form twenty-five square shapes of 2 mm × 2 mm, and a cellophane adhesive tape is bonded thereon, followed by peeling to examine the adhesion between the printing membrane and the film substrate.

As the evaluation results, among twenty-five square shapes, the number of ones remained on the substrate without being peeled was shown as from 0/25 to 25/25. The larger the numerical value, the better the adhesion. The obtained results are shown in Table 5.

**TABLE 5**

| | Sub strate | Ex. 1 | Ex. 2 | Ex. 3 | Ex. 4 | Ex. 5 | Ex. 6 | Comp. Ex. 1 | Comp. Ex. 2 | Comp. Ex. 3 |
|---|---|---|---|---|---|---|---|---|---|---|
| Peel strength [N/25 mm] | PET | 2.0 | 3.5 | 3.8 | 2.4 | 1.7 | 2.2 | 1.2 | 1.5 | 1.5 |
| X-Cut method | PET | 6 | 10 | 10 | 10 | 4 | 6 | 0 | 0 | 0 |
| Cross-cut method | PET | 6/25 | 10/25 | 10/25 | 7/25 | 4/25 | 7/25 | 2/25 | 2/25 | 7/25 |
| | NY | 22/25 | 12/25 | 15/25 | 20/25 | 12/25 | 15/25 | 8/25 | 19/25 | 3/25 |

From Table 5, the printing membranes produced by using polyurethanes (P1) to (P6) obtained in the Examples 1 to 6 were found to be excellent in the peel strength and the adhesion evaluation by X-cut method. In the case of cross-cut method, among Examples 1 to 6, the adhesion to the PET substrate in Example 5 was found to be slightly poor, but others were found to be good.

Comparative Example 1 was found to have poor adhesion in all of the evaluation methods. Although Comparative Example 2 was found to have good adhesion to the nylon substrate, its adhesion to the PET substrate was found to be poor. Although Comparative Example 3 was found to have good adhesion to the PET substrate by cross-cut method, but it showed poor adhesion by the other evaluation methods.

### INDUSTRIAL APPLICABILITY

The polyurethane for printing ink binders of the present invention can provide a printing ink excellent in solubility in a solvent having a low solvency such as ethyl acetate, isopropyl alcohol or the like and excellent also in adhesion to various films for food packaging, and it is industrially useful from both aspects of consideration for environmental conservation of global scale and high quality.

The entire disclosures of Japanese Patent Application No. 2007-287651 filed on November 5, 2007 and Japanese Patent Application No. 2008-222100 filed on August 29, 2008 including specifications, claims and summaries are incorporated herein by reference in their entireties.

## Claims

1. A polyurethane for printing ink binders comprising a constituting unit derived from an initiator (a) having at least two active hydrogen groups per molecule, a constituting unit derived from a dicarboxylic acid anhydride (b), a constituting unit derived from an alkylene oxide (c), a constituting unit derived from a polyisocyanate (B) and a constituting unit derived from a chain extender (C).

2. The polyurethane for printing ink binders according to Claim 1, wherein the initiator (a) is a polyether polyol, a polyhydric alcohol, a polyoxytetramethylene glycol, a polyester polyol or a polycarbonate polyol.

3. The polyurethane for printing ink binders according to Claim 1 or 2, wherein the dicarboxylic acid anhydride (b) is phthalic anhydride or hexahydrophthalic anhydride.

4. The polyurethane for printing ink binders according to any one of Claims 1 to 3, wherein the alkylene oxide (c) is propylene oxide or ethylene oxide.

5. The polyurethane for printing ink binders according to any one of Claims 1 to 4, wherein the chain extender (C) is a compound having two amino groups.

6. A method for producing a polyurethane for printing ink binders, which comprises a step of ring opening polymerization of an initiator (a) having at least two active hydrogen groups per molecule with a mixture of a dicarboxylic acid anhydride (b) and an alkylene oxide (c) to obtain a polyesterether polyol (A1), a step of reacting a polyol (A) including the polyesterether polyol (A1) with a polyisocyanate (B) to obtain an isocyanate-terminated prepolymer (UI), a step of reacting the isocyanate-terminated prepolymer (UI) with a chain extender (C) to obtain a polyurethane (UIH).

7. The method for producing a polyurethane for printing ink binders according to Claim 6, wherein in the polyesterether polyol (A1) a constituting unit derived from the initiator (a) is from 1 to 60 mass%, a constituting unit derived from the dicarboxylic acid anhydride (b) is from 10 to 50 mass%, and the molar ratio of the alkylene oxide (c) to the dicarboxylic acid anhydride (b) is [amount (mol) of the alkylene oxide (c)]/[amount (mol) of the dicarboxylic acid anhydride (b)]= from 50/50 to 95/5.

8. The method for producing a polyurethane for printing ink binders according to Claim 6 or 7, wherein the polyesterether polyol (A1) has a hydroxyl value of from 10 to 250 mgKOH/g.

9. The method for producing a polyurethane for printing ink binders according to any one of Claims 6 to 8, wherein the polyesterether polyol (A1) has an average molecular weight (M') of from 50 to 3,000 per copolymerization chain.

10. The method for producing a polyurethane for printing ink binders according to any one of Claims 6 to 9, wherein the polyurethane (UIH) has a weight average molecular weight of from 30,000 to 300,000.

11. The method for producing a polyurethane for printing ink binders according to any one of Claims 6 to 10, wherein a constituting unit derived from the dicarboxylic acid anhydride (b) is from 10 to 50 mass% in the polyesterether polyol (A1).

12. The method for producing a polyurethane for printing ink binders according to any one of Claims 6 to 11, wherein the polyisocyanate (B) is at least one member selected from the group consisting of isophorone diisocyanate, hexamethylene diisocyanate, 2,4-tolylene diisocyanate and 2,6-tolylene diisocyanate.

13. A printing ink containing the polyurethane for printing ink binders as defined in any one of Claims 1 to 5.

14. The printing ink according to Claim 13, wherein the blend amount of the polyurethane for printing ink binders as defined in any one of Claims 1 to 5 is from 5 to 30 mass% as a resin solid content in the printing ink.
